# EUROPEAN PATENT SPECIFICATION

(11) **EP 4 116 553 B1**
(45) Date of publication and mention of the grant of the patent: **26.11.2025**
(21) Application number: 20923100.0
(22) Date of filing: 06.03.2020
(51) Int. Cl.: F02B 31/06, F02M 35/10, F02D 9/10, F02M 35/16

(54) **SADDLE-TYPE VEHICLE WITH INTERNAL COMBUSTION ENGINE AND INTAKE CONTROL DEVICE**
SATTELFAHRZEUGS MIT VERBRENNUNGSMOTOR UND EINLASSSTEUERVORRICHTUNG
VÉHICULE DE TYPE À SELLE AVEC MOTEUR À COMBUSTION INTERNE ET DISPOSITIF DE COMMANDE D'ADMISSION

(43) Date of publication of application: 11.01.2023
(73) Proprietor: HONDA MOTOR CO., LTD., Tokyo 105-8404 (JP)
(72) Inventor: TANAKA, Masato, Tokyo 107-8556 (JP); HIROSE, Kyohei, Tokyo 107-8556 (JP)
(74) Representative: Weickmann & Weickmann PartmbB
(86) International application number: PCT/JP2020/009835
(87) International publication number: WO 2021/176720

(56) References cited:
- JP-A- 2012 062 800
- JP-A- 2014 061 851
- JP-A- 2014 070 569
- JP-A- 2014 070 569
- JP-A- 2015 068 212
- US-A1- 2009 314 231
- US-B2- 10 526 982

## Description

### [Technical Field]

The present invention relates to an intake control device and an internal combustion engine mounted on a saddle-type vehicle.

### [Background Art]

An intake control device in which a tumble control valve that controls intake air supply to one side of an intake passage divided into two and generates a vortex flow such as a tumble flow in an air-fuel mixture in a combustion chamber is added to the downstream side of a throttle valve in an intake passage of an internal combustion engine is disclosed in, for example, JP 2008-057463 A below.

However, although JP 2008-057463 A below shows a concept of an intake control device, a specific configuration and arrangement of an intake control device that is compact and safe in a case where an intake control valve such as a tumble control valve is provided in addition to a throttle valve in an internal combustion engine mounted on a saddle-type vehicle that is spatially limited is not disclosed.

JP 2014 070569 A discloses a saddle-type vehicle according to the preamble of claim 1. There the vehicle body frame is not single but is laterally branched and thus, the intake passage extends parallel straight to the vehicle right center line but is not curved. Further, both actuators of the throttle valve and the tumble control valve located on the same (left) side of the intake passage, and none of them is located more to the outside than the other. The throttle main body is located on the right side of the actuator.

JP 2014 061851 A discloses a saddle-type vehicle, comprising an internal combustion engine and an intake control device for said internal combustion engine, comprising a throttle valve provided in an intake passage that intake air passes to a combustion chamber of an internal combustion engine and controlled to any given opening degree to control an intake air amount; wherein the intake passage extends rearward from a cylinder head of a cylinder portion of the internal combustion engine with an angle of inclination with respect to a vehicle left-right center line, the main frame is a single main frame extending backward and downward from a head pipe of the vehicle body frame, and the main frame is curved and extends further downward. No tumble valve is provided, and the throttle valve body does not overlap the main frame but is located well below the main frame and the main body of the throttle valve body is not located above the actuator.

### [Summary of the Invention]

### [Underlying Problems to be solved by the Invention]

The present invention has been made in view of such prior art, and is aimed to provide a compact and protected intake control device in a case where a saddle-type vehicle internal combustion engine includes an intake control valve such as a tumble control valve in addition to a throttle valve.

### [Means to solve the Problems]

To solve the above-described problem, the present invention provides a saddle-type vehicle according to claim 1.

According to the configuration described above,
the actuator of the tumble control valve is disposed in a dead space behind the cylinder portion of the internal combustion engine, and is disposed at a position surrounded by the cylinder portion on the front side, by the pipe portion constituting the intake passage on the side, and by the main frame on the upper side, so that the actuator of the tumble control valve can be compactly disposed and appropriately protected.

According to the present invention,
in plan view, the actuator of the throttle valve is positioned more on the outside than the actuator that drives the tumble control valve, with respect to the vehicle left-right center line.

Therefore, the actuator of the throttle valve and the actuator of the tumble control valve that are heavy are disposed separately on the relatively near side and relatively far side with respect to the vehicle left-right center line, and thus the weight balance of the entire vehicle is more preferable.

According to the invention,
an upstream side of a connecting tube connected to an upstream side of a throttle body including the throttle valve is connected to a surface of an air cleaner facing the side of the vehicle.

When the connecting tube is connected to the front surface side of the air cleaner as in the related art, in a case where the tumble control valve and the throttle valve are provided in the intake passage, the intake passage becomes long, a pipe portion such as the connecting tube constituting the intake passage is bent, and thus the angle thereof becomes large, but since the connecting tube can be smoothly connected according to the above configuration, the flow of intake air becomes smooth, and intake air is rectified, so that the intake performance is improved.

According the invention,
in side view, the actuator of the throttle valve is at a position overlapping the main frame.

Therefore, even when the main frame is disposed in the vicinity of the rear of the cylinder portion of the internal combustion engine, the throttle valve can be disposed near the cylinder portion of the internal combustion engine, so that the responsiveness of the intake control is improved and the intake performance is improved. In addition, occurrence of decrease in the rigidity of the main frame caused by unnecessarily elongating the main frame in order to secure a space for the actuator, and increase in the size of the vehicle are avoided.

### [Effects of the Invention]

According to the intake control device for the saddle-type vehicle internal combustion engine,
the actuator of the tumble control valve is disposed in a dead space behind the cylinder portion of the internal combustion engine, and is disposed at a position surrounded by the cylinder portion on the front side, by the pipe portion constituting the intake passage on the side, and by the main frame on the upper side, so that the actuator of the tumble control valve can be compactly disposed and appropriately protected.

### [Brief Description of Drawings]

Fig. 1 is a right side view of a motorcycle according to an embodiment of the present invention.
Fig. 2 is a right side cross-sectional view of an internal combustion engine mounted on the motorcycle in Fig. 1.
Fig. 3 is a plan cross-sectional view of a main central portion of the motorcycle as viewed in a direction of arrows III-III in Fig. 1.
Fig. 4 is a right side perspective view of the main central portion of the motorcycle illustrating a state in which a fuel tank, a seat, and a rear side cover are removed, and the surroundings of a tumble valve device, a throttle body, and a connecting tube are viewed from diagonally above on the right side in a direction of an arrow IV in Fig. 3.

### [Mode for carrying out the Invention]

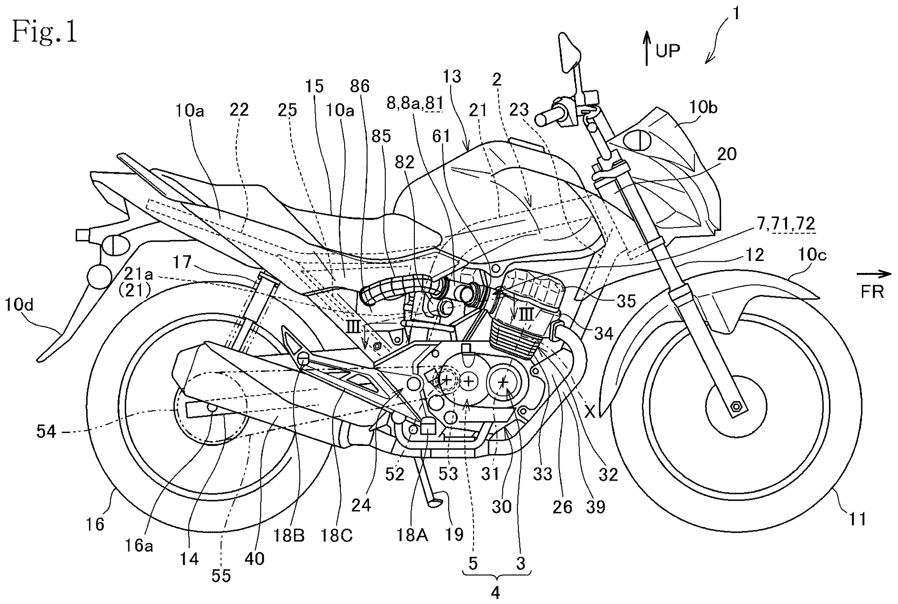

An intake control device for a saddle-type vehicle internal combustion engine according to an embodiment of the present invention will be described with reference to Figs. 1 to 4.

In the present embodiment, the internal combustion engine is mounted on a saddle-type vehicle, and in the present embodiment, the saddle-type vehicle is a motorcycle.

Note that directions such as front, rear, left, right, up, and down in the present specification and claims are determined in accordance with the direction of the saddle-type vehicle such as a motorcycle equipped with the internal combustion engine of the present embodiment. In addition, in the drawing, arrows FR, LH, RH, and UP respectively indicate forward, leftward, rightward, and upward directions with respect to the vehicle.

Fig. 1 is a right side view of a motorcycle 1 according to an embodiment of the present invention.

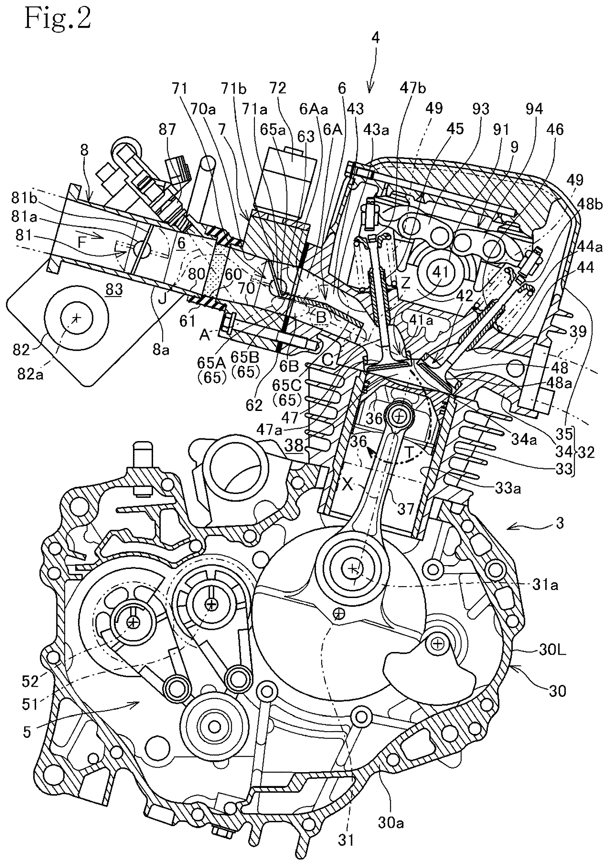

Fig. 2 is a right side cross-sectional view of an internal combustion engine mounted on the motorcycle 1 in Fig. 1.

A vehicle body frame 2 of a motorcycle ("saddle-type vehicle" in the present invention) 1 includes: a head pipe 20 constituting a front end; a main frame 21 having a hanging portion 21a that extends rearward and downward from the head pipe 20 and then curves to further extend downward; a pair of left and right seat rails 22 extending rearward from the curved portion of the main frame 21; a down frame 23 extending downward at the center of in the vehicle width direction from the head pipe 20; a pair of left and right pivot plates 24 attached to lower portions of the hanging portion 21a of the main frame 21; and a pair of left and right rear frames 25 extending rearward and upward from the pivot plates 24 and connected to substantially central portions of the seat rails 22 in a vehicle front-rear direction.

A front fork 12 supporting a front wheel 11 is pivotably attached to a lower portion of the head pipe 20, and a fuel tank 13 is attached to the main frame 21. A swing arm 14 is supported by the pivot plates 24 in a vertically swingable manner. In addition, a seat 15 and a pair of left and right rear side covers 10a are attached to the seat rails 22.

A front cowl 10b integrally provided with a headlight, a front winker, and the like is supported in front of the head pipe 20. A front fender 10c that covers the front wheel 11 from above is supported at a lower portion of the front fork 12. The swing arm 14 rotatably supports a rear wheel 16 at a rear end portion thereof. A lower end of a rear cushion unit 17 is attached to a rear portion of the swing arm 14, and an upper end of the rear cushion unit 17 is attached to a portion near a connection portion between the rear frame 25 and the seat rails 22.

The seat 15 is formed as a tandem seat for two persons which is long in the front-rear direction and on which a driver and a passenger can sit. A side stand 19 for parking the motorcycle 1, an unillustrated center stand, a step 18A on which the driver puts a foot, a step bracket 18C supporting a pillion step 18B on which the passenger puts a foot, and the like are attached to a lower portion of the pivot plate 24.

An engine hanger 26 is fixed to a lower portion of the down frame 23, and a power unit 4 integrally including an internal combustion engine 3 and a transmission 5 is supported by the engine hanger 26 and the pair of left and right pivot plates 24.

The internal combustion engine 3 includes a crankcase 30 that houses a crankshaft 31, and a cylinder portion 32 that is fastened to an upper portion of the crankcase 30 with a cylinder axis X slightly inclined forward.

The cylinder portion 32 includes a cylinder block 33, a cylinder head 34, and a head cover 35 from the crankcase 30 side.

The internal combustion engine 3 is disposed in a region surrounded by the main frame 21 and the down frame 23 in side view.

The cylinder block 33 is attached to the crankcase 30 so as to rise slightly forward, a front portion of the crankcase 30 is supported by the engine hanger 26, and a rear portion of the crankcase 30 is supported by the pivot plate 24.

A throttle body 8 is connected to the rear surface of the cylinder head 34 via a tumble valve device 7, and an air cleaner 86 is connected to the upstream side of the throttle body 8 via a connecting tube 85.

In addition, an exhaust pipe 39 is connected to a front surface of cylinder head 34, and a muffler 40 is connected to the downstream side of exhaust pipe 39. The air cleaner 86 is disposed in a region that is triangular in side view and surrounded by the seat rail 22, the main frame 21, and the rear frame 25.

Both left and right sides of an upper half portion of the air cleaner 86 are covered with the pair of left and right rear side covers 10a made of a resin material.

The rear side covers 10a overlap a part of a rear portion of the fuel tank 13 in side view, extend rearward from the rear portion of the fuel tank 13 to extend below the seat 15, and extend to the rear lower end of the seat 15. As illustrated in Fig. 1, a rear lower portion of the fuel tank 13 and the lower edge of the seat 15 are covered with the rear side covers 10a so as not to be visible, and thus the appearance is improved. In addition, the rear side covers 10a cover the outer side of the seat rails 22 in the vehicle width direction, and thus the appearance is improved.

To be noted, in Fig. 1, reference numeral 10d denotes a rear fender.

Fig. 2 is a right side cross-sectional view of the power unit 4 in which the power unit 4 is extracted from Fig. 1 and illustrated in approximately the same orientation as in Fig. 1.

In the internal combustion engine 3 in the power unit 4, the cylinder block 33, the cylinder head 34, and the head cover 35 constituting the cylinder portion 32 are provided on the crankcase 30 with the cylinder axis X slightly inclined forward as illustrated in the cross section of the left half surface in Fig. 2.

In the crankcase 30, a left case half body 30L is illustrated in a state in which a mating surface 30b with an unillustrated right case half body is facing toward the viewer of the drawing.

The transmission 5 including a main shaft 51 and a counter shaft 52 that are parallel to the crankshaft 31 is provided inside a rear portion of the crankcase 30.

The rotation of the crankshaft 31 accompanied by the operation of the internal combustion engine 3 is transmitted to the main shaft 51 via an unillustrated shift clutch, and is shifted by an unillustrated shift gear group provided among the main shaft 51 and the counter shaft 52 to be transmitted to the counter shaft 52.

The counter shaft 52 is an output shaft of the internal combustion engine 3, that is, the power unit 4, a drive chain 55 is stretched between a drive sprocket 53 fitted to a left shaft end of the counter shaft 52 and a driven sprocket 54 fitted to a rear wheel shaft 16a, and the rear wheel 16 is driven to travel.

The piston 36 reciprocating in a cylinder bore 33a of the cylinder block 33 is connected to a crank pin 31a of the crankshaft 31 by a connecting rod 37.

A combustion chamber 38 is formed between a top surface 36a of the piston 36 slidably fitted in the cylinder bore 33a of the cylinder block 33 and a combustion chamber ceiling surface 34a of the cylinder head 34 facing the top surface 36a.

In the present embodiment, the internal combustion engine 3 adopts a SOHC-type two-valve system, and a valve operating mechanism 9 is provided in the cylinder head 34.

The cylinder head 34 is covered with the head cover 35 so as to cover the valve operating mechanism 9.

In order to transmit power for valve operation to the valve operating mechanism 9, an unillustrated endless cam chain is stretched between a camshaft 91 and the crankshaft 31 through an unillustrated cam chain chamber provided on one side of the cylinder block 33, and the cylinder head 34 in the crankshaft 31 direction of the crankcase 30, and the camshaft 91 rotates at a rotation speed of 1/2 of the crankshaft 31 in synchronization with the crankshaft 31.

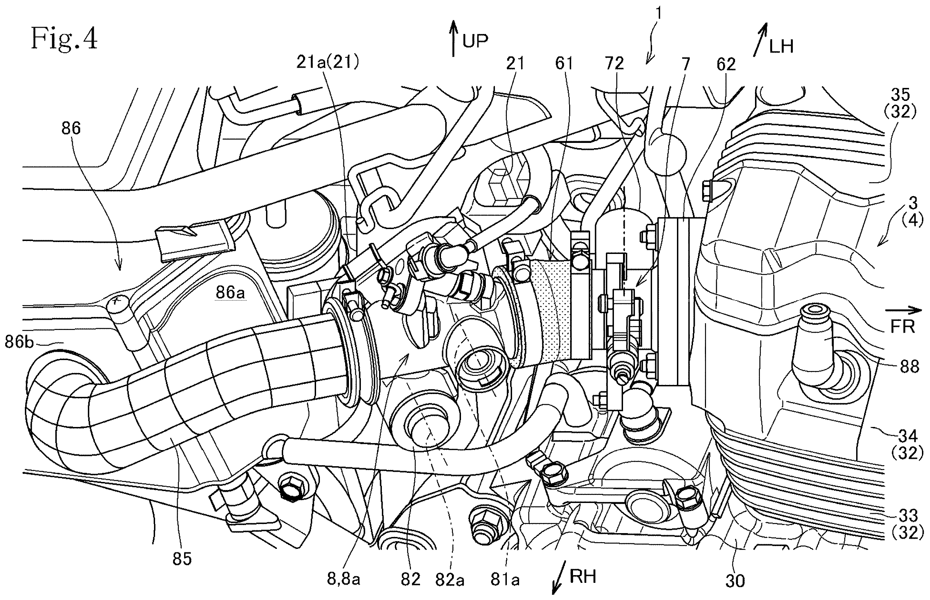

To be noted, an ignition plug 88 is fitted and inserted into the combustion chamber 38 from the side (the other side in the crankshaft 51 direction, the viewer side of Fig. 2 in the present embodiment) opposite to the cam chain chamber in the cylinder head 34 (see Fig. 4).

In the cylinder head 34 of the cylinder portion 32 in which the cylinder axis X is slightly inclined forward, an exhaust port 44 and an intake port 43 are formed to respectively extend from an exhaust valve port 42 and an intake valve port 41 opening in the combustion chamber ceiling surface 34a, while being curved in directions away from each other in the front-and-rear direction.

The upstream end of the intake port 43 opens toward the rear side of the cylinder head 34 and is connected to the tumble valve device 7 with an insulator 62 interposed therebetween, and the throttle body 8 is connected to the upstream side of the tumble valve device 7 via a rubber insulator 61. The air cleaner 86 is sequentially connected to the upstream side of the throttle body 8 via the connecting tube 85 (see Fig. 1).

That is, the connecting tube 85, a airflow passage 80 of the throttle body 8, a airflow passage 60 of the rubber insulator 61, a airflow passage 70 of the tumble valve device 7, an opening 63 of the insulator 62, and the intake port 43 constitute a continuous intake passage 6 that sends intake air from the air cleaner 86 to the combustion chamber 38.

The downstream end of the exhaust port 44 opens toward the front side of the cylinder head 34 and is coupled to the exhaust pipe 39, and the exhaust pipe 39 extends below the power unit 4 and then is connected to the muffler 40 on the right side of the rear wheel 16 (see Fig. 1).

A cylindrical intake valve guide 45 is integrally fitted to a curved outer wall portion 43a of the intake port 43 in the cylinder head 34, and an intake valve 47 slidably supported by the intake valve guide 45 opens and closes the intake valve port 41 facing the combustion chamber 38 of the intake port 43.

In addition, an exhaust valve 48 slidably supported by an exhaust valve guide 46 integrally fitted to a curved outer wall portion 44a of the exhaust port 44 in the cylinder head 34 opens and closes the exhaust valve port 42 facing the combustion chamber 38 of the exhaust port 44.

The intake valve 47 and the exhaust valve 48 are respectively urged upward by valve springs 49 such that umbrella portions 47a and 48a thereof close the intake valve port 41 and the exhaust valve port 42 each facing the combustion chamber 38, stem ends 47b and 48b of the intake valve 47 and the exhaust valve 48 are pushed down by an intake rocker arm 93 and an exhaust rocker arm 94 that abut an intake cam and an exhaust cam of the camshaft 91 and swings, thus the intake valve 47 and the exhaust valve 48 are opened at a predetermined timing to cause the intake port 43 to communicate with the combustion chamber 38 and the exhaust port 44 to communicate with the combustion chamber 38, and thus intake and exhaust are performed at a predetermined timing.

In the internal combustion engine 3 of the present embodiment as described above, in order to obtain more preferable combustion in the combustion chamber 38, an intake control device for providing a tumble flow T, that is, vertical rotation of a fuel-air mixture in the combustion chamber 38 is configured.

The throttle body 8 includes a throttle valve 81 that is rotatably supported in the throttle body 8 by a throttle valve shaft 81a oriented substantially horizontally and perpendicular to a flow direction F of the airflow passage 80 thereof, that is, the intake passage 6, is controlled to any given opening degree to variably control the passage area of the airflow passage 80 and the intake air amount, and can open and close the airflow passage 80.

In addition, on the downstream side of the throttle valve 81 in the flow direction F of the intake passage 6, a tumble control valve 71 that is provided in the airflow passage 70 of the tumble valve device 7, rotatably supported in the tumble valve device 7 by a tumble valve shaft 71a oriented substantially horizontally, perpendicular to the flow direction F of the airflow passage 70 thereof, that is, the intake passage 6, and parallel to the throttle valve shaft 81a, and is controlled to a given opening degree.

Further, the intake passage 6 on the downstream side of the tumble control valve 71 is divided into a main passage 6A and a tumble passage 6B by a partition wall 65 along the passage direction, and the tumble valve shaft 71a of the tumble control valve 71 is provided adjacent to an upstream end portion 65a of the partition wall 65.

The tumble control valve 71 provided in the airflow passage 70 on the downstream side of the throttle valve 81 is of a butterfly type, and includes the tumble valve shaft 71a and a tumble valve plate 71b that is bolted and fixed to rotate together with the tumble valve shaft 71a and has a semicircular shape upward.

The tumble control valve 71 is rotatable in a valve opening direction in a counterclockwise direction in Fig. 2, and is urged by an unillustrated return spring in a valve closing direction in a clockwise direction so that the tumble valve plate 71b is located at a tumble valve closing position where the tumble valve plate 71b is in contact with an inner surface 70a of the airflow passage 70.

In addition, the throttle valve 81 provided in the intake passage 6 of the throttle body 8, that is, the airflow passage 80 is also of a butterfly type, and includes the throttle valve shaft 81a and a disk-shaped throttle valve plate 81b bolted and fixed so as to rotate together with the throttle valve shaft 81a.

The throttle valve 81 is rotatable in a valve opening direction in the clockwise direction in Fig. 2, and is urged by an unillustrated return spring in a valve closing direction in the counterclockwise direction so that the throttle valve plate 81b is located at a fully closing position where the throttle valve plate 81b is in contact with an inner surface 80a of the airflow passage 80.

In the present embodiment, the intake passage 6 is vertically partitioned by the partition wall 65 continuously from the tumble valve device 7 to the intake port 43, and is partitioned into the tumble passage 6B defined on the lower side and the main passage 6A excluding the tumble passage 6B.

The partition wall 65 is constituted by a tumble valve device side partition wall 65A having an upstream end portion 65a, an insulator side partition wall 65B, and an intake port side partition wall 65C that are arranged to be continuous with each other.

As can be seen from cross sections A, B, and C indicated by two-dot chain lines in Fig. 2, the cross section of the tumble passage 6B is changed by the partition wall 65 passing longitudinally from the tumble valve device 7 to the intake port 43.

That is, at an inlet portion of the intake port 43 in the vicinity of the upstream end portion 65a of the partition wall 65, the intake passage 6 is partitioned into an upper portion and a lower portion so as to be defined in a substantially semicircular shape on the lower side as shown in the cross section A, and on the more downstream side through the intake port 43, the cross section of the intake port side partition wall 65C changes into an arc shape, and the cross section is formed to have a circular cross section as shown in the cross section B.

Further, a cross section of the tumble passage 6B up to the downstream end portion of the intake port side partition wall 65C maintains a circular cross section as shown in the cross section C.

Further, a center line Z of the tumble passage 6B from the cross section B to the cross section C is set so as to be directed toward a part between an opening edge 41a of the intake valve port 41 on the side closer to the exhaust valve port 42 and the umbrella portion 47a of the intake valve 47.

To be noted, a fuel injection valve 87 that is disposed to penetrate the intake passage 6 on the downstream side of the throttle valve 81, that is, the airflow passage 80 from above outside, and inject and supply fuel toward the obliquely downstream side (injection line J schematically illustrated in Fig. 2) is attached to the throttle body 8.

Therefore, the intake air flowing through the tumble passage 6B can be caused to pass through a space above the umbrella portion 47a of the intake valve 47 and efficiently flow into the cylinder bore 32a from between the opening edge 41a of the intake valve port 41 closer to the exhaust valve port 42 so that the tumble flow T can be easily generated in the combustion chamber 38. That is, the tumble passage 6B serves as a flow path of intake air for generating the tumble flow T.

The tumble control valve 71, by the tumble valve plate 71b provided on the upper side, opens and closes a passage cross section of the main passage 6A among the pair of the main passage 6A and the tumble passage 6B respectively provided on the upper side and the lower side and that divide the intake air flow in the intake passage 6 on the downstream side thereof to control the intake air supply to the main passage 6A, and the intake air distribution between the main passage 6A and the tumble passage 6B of the intake passage 6 is controlled.

That is, at the closing position of the tumble control valve 71, the tumble valve plate 71b is positioned so as to cover an inlet opening 6Aa of the main passage 6A to close or suppress the inflow of the intake air flow, the intake air flow is guided to the tumble passage 6B side, and the intake air from the tumble passage 6B flows into the cylinder bore 32a as the air-fuel mixture together with the fuel from the fuel injection valve 87.

When the internal combustion engine 3 is operated at a low load, the throttle valve 81 is narrowed to reduce the amount of intake air, but the flow rate of the intake air flowing into the combustion chamber 38 can be increased by passing most of the intake air through the tumble passage 6B by the tumble control valve 71, and fuel combustion in the combustion chamber 38 can be favorably maintained while strengthening the tumble flow T of intake air generated in the combustion chamber 38.

The tumble flow T indicated by a two-dot chain line in Fig. 2 schematically indicates the tumble flow T in the combustion chamber 38 when the piston 36 descends in the cylinder bore 33a as indicated by a two-dot chain line.

In addition, as the internal combustion engine 3 operates under a high load, the throttle valve 81 opens and the intake amount increases, and the tumble control valve 71 is rotated in the opening direction to increase the inflow of the intake air flow into the main passage 6A.

Further, as indicated by a two-dot chain line in Fig. 2, the throttle valve 81 and the tumble control valve 71 are located to be parallel with the flow direction F of the intake passage 6, and the intake air flow flowing through the intake passage 6 flows into both the main passage 6A and the tumble passage 6B with a sufficient amount of intake air without being disturbed by the throttle valve 81 and the tumble control valve 71, and both can flow toward the combustion chamber 38 as an air-fuel mixture with fuel from the fuel injection valve 87.

In the present embodiment, the throttle valve 81 is rotated when an unillustrated engine control unit (ECU) starts an actuator 82 of the throttle valve 81 on the basis of an operation of a driver and a situation of the internal combustion engine 3, and thus the valve is positioned, opened, and closed.

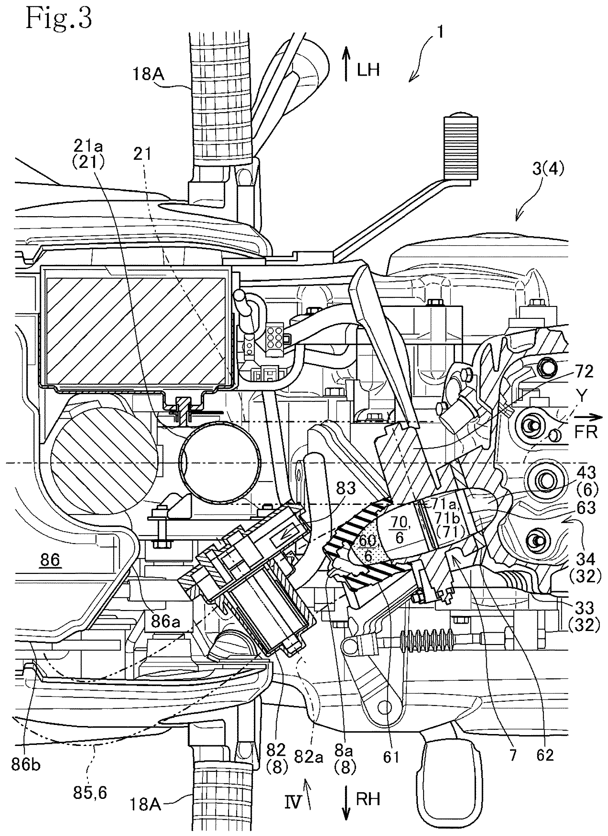

In the present embodiment, the actuator 82 is mainly constituted by an electric motor, as illustrated in Figs. 2 and 4, since the throttle valve shaft 81a and the electric motor shaft, that is, an actuator shaft center 82a are offset from each other, an appropriate transmission portion 83 such as a gear mechanism is provided therebetween (see Fig. 3).

In addition, the tumble control valve 71 is rotated when the unillustrated engine control unit (ECU) starts an actuator 72 of the tumble control valve 71 on the basis of the situation of the internal combustion engine 3, and thus the valve is positioned, opened, and closed. In the present embodiment, the actuator 72 is mainly constituted by an electric motor.

Since the actuator 82 of the throttle valve 81 and the actuator 72 of the tumble control valve 71 are heavy and require an installation space, a more preferable arrangement is required in a saddle-type vehicle such as a motorcycle.

As illustrated in Fig. 3, which is a cross-sectional plan view of the main central portion of the motorcycle 1 as viewed in the direction of arrows III-III in Fig. 1, in the present embodiment, the tumble valve device 7 is fastened and connected to the intake port 43 opening to the rear portion of the cylinder head 34, with the insulator 62 interposed therebetween.

The intake flow upstream side of the tumble valve device 7 is connected to the throttle body 8 via the rubber insulator 61, the upstream side of the throttle body 8 is further connected to the connecting tube 85 and is thus connected to the air cleaner 86. In Fig. 3, the main body 8a of the throttle body 8 (see Figs. 1 and 2) including the airflow passage 80 and the throttle valve 81, and the connecting tube 85 are located above the cross section taken in the direction of the arrows III-III in Fig. 1, that is, on the viewer side of Fig. 3, and thus are indicated by two-dot chain lines in Fig. 3.

Therefore, in Fig. 3, regarding the throttle valve 81, the actuator 82 and the transmission portion 83 to the throttle valve shaft 81a are illustrated as cross sections, and the main body 8a of the throttle body 8 is located above the actuator 82.

In addition, regarding the tumble valve device 7, the actuator 72, the airflow passage 70, and the tumble control valve 71 are illustrated as cross sections.

As illustrated in Figs. 1 and 2, in the present embodiment, the actuator 72 that drives the tumble control valve 71 is located behind the cylinder portion 32 of the internal combustion engine 3, and as illustrated in Fig. 3, and is located on the vehicle left-right center line Y side with respect to the main body 8a of the tumble valve device 7 and the throttle body 8 constituting the intake passage 6 in plan view, and at least a part of the actuator 72 overlaps the main frame 21 of the vehicle body frame 2 in plan view.

Therefore, the actuator 72 of the tumble control valve 71 is disposed in a dead space behind the cylinder portion 32 of the internal combustion engine 3, and is disposed at a position surrounded by the cylinder portion 32 on the front side, by the pipe portion constituting the intake passage 6, that is, the tumble valve device 7 and the main body 8a of the throttle body 8 on the side, and by the main frame 21 on the upper side, so that the actuator 72 of the tumble control valve 71 can be compactly disposed and appropriately protected.

In addition, as illustrated in Fig. 3, in plan view, the actuator 82 of the throttle valve 81 is positioned further on the outside than the actuator 72 that drives the tumble control valve 71, with respect to the vehicle left-right center line Y.

Therefore, the actuator 82 of the throttle valve 81 and the actuator 72 of the tumble control valve 71 that are heavy are disposed separately on the relatively near side and relatively far side with respect to the vehicle left-right center line Y, and thus the weight balance of the entire vehicle is more preferable.

In addition, as illustrated in Fig. 1, the actuator 82 of the throttle valve 81 is located at a position overlapping the hanging portion 21a of the main frame 21 in side view.

That is, even when the main frame 21 is disposed in the vicinity of the rear of the cylinder portion 32 of the internal combustion engine 3, the throttle valve 81 can be disposed near the cylinder portion 32 of the internal combustion engine 3 by positioning the actuator 82 of the throttle valve 81 so as to cross the hanging portion 21a of the main frame 21 on the side.

Therefore, the responsiveness of the intake control of the internal combustion engine 3 is improved, and the intake performance is improved.

In addition, occurrence of decrease in the rigidity of the main frame 21 caused by unnecessarily elongating the main frame 21 in order to secure a space for the actuator 82 of the throttle valve 81, and increase in the size of the vehicle are avoided.

Fig. 4 is a right side perspective view of the main central portion of the motorcycle 1 illustrating a state in which the fuel tank 13, the seat 15, and the rear side cover 10a are removed, and the surroundings of the tumble valve device 7, the throttle body 8, and the connecting tube 85 are viewed from diagonally above on the right side in a direction of arrows IV-IV in Fig. 3.

As illustrated in Fig. 4, in the present embodiment, the upstream side of the connecting tube 85 connected to the upstream side of the main body 8a of the throttle body 8 provided with the throttle valve 81 is connected to a side surface 86b of the air cleaner 86 ("surface facing the side of the vehicle" in the present invention).

In a case where the tumble control valve 71 and the throttle valve 81 are provided between the cylinder portion 32 and the air cleaner 86 as in the present embodiment, the intake passage 6 passing through the tumble valve device 7 and the throttle body 8 becomes long, and when the connecting tube 85 is to be connected to the front surface 86a side of the air cleaner 86 as in the known art, the distance between the cylinder portion 32 and the air cleaner 86 is set to be excessively long, or in a case where the connecting tube 85 itself including the pipe portion constituting the intake passage 6 between the cylinder portion 32 and the air cleaner 86 or the connection between the tumble valve device 7 and the throttle body 8 is bent and the angle thereof becomes large, there is a possibility that the intake performance is affected.

However, since the upstream side of the connecting tube 85 is connected to the side surface 86b of the air cleaner 86, the connecting tube 85 can be smoothly connected even at a normal distance between the cylinder portion 32 and the air cleaner 86, and a flow of intake air becomes smooth and the intake air is rectified, so that the intake performance is improved.

Although an embodiment of the present invention has been described above, the present invention is not limited to the embodiment described above, and various design changes can be made without departing from the scope of the appended claims, and it is needless to say that a saddle-type vehicle, an internal combustion engine, and the like are implemented in various forms within the scope of the appended claims.

### [Reference Signs List]

1 motorcycle ("saddle-type vehicle" in the present invention)
2 vehicle body frame
3 internal combustion engine
4 power unit
5 transmission
6 intake passage
6A main passage
6Aa inlet opening
6B tumble passage
7 tumble valve device
8 throttle body
8a main body
20 head pipe
21 main frame
21a hanging portion
23 down frame
24 pivot plate
26 engine hanger
30 crankcase
31 crankshaft
32 cylinder portion
33 cylinder block
33a cylinder bore
34 cylinder head
34a combustion chamber ceiling surface
36 piston
36a top surface
38 combustion chamber
41 intake valve port
41a opening edge
42 exhaust valve port
43 intake port
43a curved outer wall portion
45 intake valve guide
47 intake valve
47a umbrella portion
60 airflow passage
61 rubber insulator
65 partition wall
65a upstream end portion
65A tumble valve device side partition wall
65B insulator side partition wall
65C intake port side partition wall
70 airflow passage
70a inner surface
71 tumble control valve
71a tumble valve shaft
71b tumble valve plate
72 actuator (of tumble control valve 71)
80 airflow passage
80a inner surface
81 throttle valve
81a throttle valve shaft
81b throttle valve plate
82 actuator (of throttle valve 81)
82a actuator shaft center
85 connecting tube
86 air cleaner
86b side surface ("surface facing the side of vehicle" in the present invention)
87 fuel injection valve
X cylinder axis
Y vehicle left-right center line
Z center line (of tumble passage 6B from cross section
B to cross section C)
T tumble flow
F flow direction (of intake passage 6)

## Claims

1. Saddle-type vehicle, comprising a main frame (21) extending backward and downward from a head pipe (20) of a vehicle body frame (2) and is curved and extends further downward and an internal combustion engine (3) with an intake control device, comprising:
a throttle body (8) including a throttle valve (81) driven by an actuator (82) mainly constituted by an electric motor and provided in an intake passage (6) that intake air passes to a combustion chamber (38) of the internal combustion engine (3) and controlled to any given opening degree to control an intake air amount; and a tumble control valve (71) driven by an actuator (72) mainly constituted by an electric motor and provided downstream of the throttle valve (81) and that opens and closes a passage cross section of a main passage (6A) of the intake passage (6) divided into the main passage (6A) and a tumble passage (6B) along a passage direction to control intake air supply to the main passage (6A), wherein the intake passage (6) extends rearward from a cylinder head (34) of a cylinder portion (32) of the internal combustion engine (3)
wherein the actuator (72) of the tumble control valve (71) is positioned behind the cylinder portion (32) of the internal combustion engine (3),
**characterized in that**
the main frame (21) is a single main frame (21) and the intake passage (6) extends rearward from the cylinder head (34) with an angle of inclination with respect to a vehicle left-right center line (Y),
that the actuator (72) of the tumble control valve (71) is positioned closer to a vehicle left right center line (Y) than the intake passage (6) in plan view on the same side of the vehicle left-right center line (Y) and is positioned such that at least a part of the actuator (72) of the tumble control valve (71) overlaps the main frame (21) of the vehicle body frame (2) in plan view,
that the actuator (82) of the throttle valve (81) is located at a position overlapping the main frame (21) in side view and is positioned more on an outside than the actuator (72) of the tumble control valve (71) with respect to the vehicle left-right center line (Y) in plan view,
and that a main body (8a) of the throttle body (8) is located above the actuator (82).

## Patentansprüche

1. Satteltyp-Fahrzeug, umfassend einen Hauptrahmen (21), welcher sich von einem Kopfrohr (20) eines Fahrzeugkörperrahmens (2) nach hinten und nach unten erstreckt und gekrümmt ist und sich ferner nach unten erstreckt, und einen Verbrennungsmotor (3) mit einer Einlassteuerungsvorrichtung umfasst, umfassend:
einen Drosselklappenkörper (8), welcher ein Drosselklappenventil (81), welches durch einen Aktuator (82) angetrieben wird, welcher hauptsächlich durch einen Elektromotor gebildet ist und in einem Einlassdurchgang (6) bereitgestellt ist, welchen Einlassluft zu einer Brennkammer (38) des Verbrennungsmotors (3) passiert, und auf jeglichen gegebenen Öffnungsgrad gesteuert wird, um eine Einlassluftmenge zu steuern; und ein Tumble-Steuerungsventil (71) umfasst, welches durch einen Aktuator (72) angetrieben wird, welcher hauptsächlich durch einen Elektromotor gebildet ist und dem Drosselklappenventil (81) nachgelagert bereitgestellt ist, und welches einen Durchgangsquerschnitt eines Hauptdurchgangs (6A) des Einlassdurchgangs (6), welcher in den Hauptdurchgang (6A) und einen Tumble-Durchgang (6B) unterteilt ist, entlang einer Durchgangsrichtung öffnet und schließt, um eine Einlassluftzufuhr in den Hauptdurchgang (6A) zu steuern, wobei sich der Einlassdurchgang (6) von einem Zylinderkopf (34) eines Zylinderabschnitts (32) des Verbrennungsmotors (3) nach hinten erstreckt,
wobei der Aktuator (72) des Tumble-Steuerungsventils (71) hinter dem Zylinderabschnitt (32) des Verbrennungsmotors (3) positioniert ist,
**dadurch gekennzeichnet, dass**
der Hauptrahmen (21) ein einzelner Hauptrahmen (21) ist und sich der Einlassdurchgang (6) von dem Zylinderkopf (34) mit einem Neigungswinkel in Bezug auf eine Fahrzeug-Links-Rechts-Mittellinie (Y) nach hinten erstreckt,
dass der Aktuator (72) des Tumble-Steuerungsventils (71) in einer Draufsicht näher an einer Fahrzeug-Links-Rechts-Mittellinie (Y) positioniert ist als der Einlassdurchgang (6) auf der gleichen Seite der Fahrzeug-Links-Rechts-Mittellinie (Y) und derart positioniert ist, dass wenigstens ein Teil des Aktuators (72) des Tumble-Steuerungsventils (71) in einer Draufsicht den Hauptrahmen (21) des Fahrzeugkörperrahmens (2) überlappt,
dass der Aktuator (72) des Drosselklappenventils (81) an einer Position angeordnet ist, welche in einer Seitenansicht den Hauptrahmen (21) überlappt, und in einer Draufsicht in Bezug auf die Fahrzeug-Links-Rechts-Mittellinie (Y) mehr an einer Außenseite positioniert ist als der Aktuator (72) des Tumble-Steuerungsventils (71),
und dass ein Hauptkörper (8a) des Drosselklappenkörpers (8) oberhalb des Aktuators (82) angeordnet ist.

## Revendications

1. Véhicule de type à selle, comportant un châssis principal (21) s'étendant vers l'arrière et vers le bas à partir d'une tubulure de refoulement (20) d'un châssis de carrosserie de véhicule (2) et étant courbé et s'étendant davantage vers le bas et un moteur à combustion interne (3) avec un dispositif de commande d'admission, comportant :
un corps de papillon (8) incluant un papillon (81) entraîné par un actionneur (82) principalement constitué d'un moteur électrique et disposé dans un passage d'admission (6) dans lequel passe de l'air d'admission se dirigeant vers une chambre de combustion (38) du moteur à combustion interne (3) et commandé à un degré d'ouverture donné quelconque pour commander une quantité d'air d'admission ; et une soupape de commande de culbutage (71) entraînée par un actionneur (72) principalement constitué d'un moteur électrique et disposée en aval du papillon (81) et qui ouvre et ferme une section transversale de passage d'un passage principal (6A) du passage d'admission (6) divisé en le passage principal (6A) et un passage de culbutage (6B) le long d'une direction de passage pour commander l'alimentation en air d'admission vers le passage principal (6A), dans lequel le passage d'admission (6) s'étend vers l'arrière à partir d'une culasse (34) d'une partie cylindre (32) du moteur à combustion interne (3)
dans lequel l'actionneur (72) de la soupape de commande de culbutage (71) est positionné derrière la partie cylindre (32) du moteur à combustion interne (3),
**caractérisé en ce que**
le châssis principal (21) est un châssis principal unique (21) et le passage d'admission (6) s'étend vers l'arrière à partir de la culasse (34) avec un angle d'inclinaison par rapport à une ligne centrale gauche-droite de véhicule (Y),
**en ce que** l'actionneur (72) de la soupape de commande de culbutage (71) est positionné plus près d'une ligne centrale gauche-droite de véhicule (Y) que le passage d'admission (6) dans une vue en plan sur le même côté de la ligne centrale gauche-droite de véhicule (Y) et est positionné de sorte qu'au moins une partie de l'actionneur (72) de la soupape de commande de culbutage (71) chevauche le châssis principal (21) du châssis de carrosserie de véhicule (2) dans une vue en plan,
**en ce que** l'actionneur (82) du papillon (81) est situé à une position chevauchant le châssis principal (21) dans une vue latérale et est positionné plus sur un extérieur que l'actionneur (72) de la soupape de commande de culbutage (71) par rapport à la ligne centrale gauche-droite de véhicule (Y) dans une vue en plan,
et **en ce qu'**un corps principal (8a) du corps de papillon (8) est situé au-dessus de l'actionneur (82).
